# EUROPEAN PATENT APPLICATION

(11) **EP 4 831 241 A1**
(43) Date of publication of application: **28.10.2026**
(21) Application number: 24907377.6
(22) Date of filing: 16.12.2024
(51) Int. Cl.: C08L 29/04, B01J 13/00, C08F 8/12, C08K 3/04, H01M 4/13, H01M 4/62, H01M 4/139

(54) **CARBON NANOTUBE DISPERSION LIQUID, RESIN COMPOSITION, MIXTURE SLURRY, ELECTRODE FILM, AND LITHIUM ION SECONDARY BATTERY**

(30) Priority: 19.12.2023 JP 2023214024
(71) Applicant: Kuraray Co., Ltd., Kurashiki-shi, Okayama 710-0801 (JP)
(72) Inventor: JIKIHARA, Atsushi, Kurashiki-shi, Okayama 710-0801 (JP); TAOKA, Yuta, Houston, Texas 77058 (US)
(74) Representative: Müller-Boré & Partner Patentanwälte PartG mbB
(86) International application number: PCT/JP2024/044459
(87) International publication number: WO 2025/134992

(57) **Abstract**

A carbon nanotube dispersion liquid containing carbon nanotubes (A), a polyvinyl alcohol (B), and a solvent (C), in which X/Y satisfies 0.8≤X/Y≤5.5, wherein X represents a storage elastic modulus at a strain of 0.1% of the carbon nanotube dispersion liquid and Y represents a storage elastic modulus at a strain of 1% of the carbon nanotube dispersion liquid. Thus, a carbon nanotube dispersion liquid having improved dispersibility and viscosity stability is provided.

## Description

### Technical Field

The present invention relates to a carbon nanotube dispersion liquid, a resin composition, a mixture slurry, an electrode film, and a lithium-ion secondary battery.

### Background Art

In recent years, non-aqueous electrolyte secondary batteries, particularly lithium-ion secondary batteries, have attracted attention with the spread of cell phones, laptop computers, and the like. A lithium-ion secondary battery generally includes a negative electrode including a carbon-based material, a positive electrode containing an active material that reversibly intercalates and deintercalates lithium ions, and a non-aqueous electrolyte in which the negative electrode and the positive electrode are immersed, and the positive electrode is produced by applying a mixture slurry including the active material, a conductive material, and a binder to a current collector plate.

As the conductive material, carbon black, ketjen black, fullerene, graphene, a carbon fine material, or the like is used. In particular, carbon nanotubes (hereinafter also referred to as CNTs), that are a type of carbon fine fibers, are tubular carbon having a diameter of 1 µm or less. The use of CNTs as a conductive material for a lithium-ion secondary battery has been investigated due to high conductivity based on a unique structure thereof or the like. In particular, multi-walled CNTs having an outer diameter of several nanometers to several tens of nanometers are relatively inexpensive and are expected to be put into practical use.

When CNTs having a small average outer diameter are used, a conductive network can be efficiently formed with a small amount, and the amount of a conductive material contained in a positive electrode and a negative electrode for a lithium-ion secondary battery can be reduced. However, the CNTs having a small average outer diameter have high cohesive strength and are difficult to disperse, and therefore it is difficult to obtain a CNT dispersion liquid having sufficient dispersibility.

To address the above-mentioned problems, methods for dispersing and stabilizing carbon nanotubes using various dispersants have been proposed. For example, a method using polyvinylpyrrolidone as a dispersant (PTL 1), a method using polyvinyl alcohol (hereinafter also referred to as "PVA") as a dispersant (PTLs 2 to 4), and the like have been proposed.

### Citation List

### Patent Literature

Patent Literature 1: JP 2005-162877 A
Patent Literature 2: JP 2014-193996 A
Patent Literature 3: JP 2020-011934 A
Patent Literature 4: JP 2021-050106 A

### Summary of Invention

### Technical Problem

An object of the present invention is to provide a carbon nanotube dispersion liquid having improved dispersibility and viscosity stability. Objects of the present invention are to provide a resin composition containing the carbon nanotube dispersion liquid, a mixture slurry, and a lithium-ion secondary battery.

### Solution to Problem

The present inventors have intensively studied, and as a result, found that when a ratio X/Y of a storage elastic modulus X at a strain of 0.1% of a carbon nanotube dispersion liquid to a storage elastic modulus Y at a strain of 1% thereof is set within a predetermined range by using a PVA as a dispersant for carbon nanotubes, the objects can be achieved.

Specifically, the above-mentioned objects are achieved by providing any of the following:
[1] A carbon nanotube dispersion liquid containing carbon nanotubes (A), a polyvinyl alcohol (B), and a solvent (C), wherein X/Y satisfies 0.8≤X/Y≤5.5, wherein X represents a storage elastic modulus at a strain of 0.1% of the carbon nanotube dispersion liquid and Y represents a storage elastic modulus at a strain of 1% of the carbon nanotube dispersion liquid.
[2] The carbon nanotube dispersion liquid according to [1], wherein the polyvinyl alcohol (B) has at least one anionic group selected from the group consisting of a carboxy group and a sulfonic acid group, and an amount of modification with the anionic group is 0.5 mol% or more and 10 mol% or less.
[3] The carbon nanotube dispersion liquid according to [1] or [2], wherein the polyvinyl alcohol (B) has a quaternary ammonium salt group, and the amount of modification is 0.1 mol% or more and 10 mol% or less.
[4] The carbon nanotube dispersion liquid according to any of [1] to [3], wherein the polyvinyl alcohol (B) has a degree of saponification of 82 mol% or more and 95 mol% or less.
[5] The carbon nanotube dispersion liquid according to any of [1] to [4], wherein the polyvinyl alcohol (B) has a viscosity-average degree of polymerization of 250 or more and less than 450.
[6] The carbon nanotube dispersion liquid according to any of [1] to [5], wherein the solvent (C) is a water-soluble organic solvent.
[7] The carbon nanotube dispersion liquid according to any of [1] to [6], wherein the solvent (C) is N-methyl-2-pyrrolidone.
[8] The carbon nanotube dispersion liquid according to any of [1] to [7], wherein a content of water is 50 parts by mass or less with respect to 100 parts by mass of the carbon nanotube dispersion liquid.
[9] A resin composition containing the carbon nanotube dispersion liquid according to any of [1] to [8], and a binder resin (D).
[10] A mixture slurry containing the resin composition according to [9], and an active material (E).
[11] An electrode film that is a film formed from the mixture slurry according to [10].
[12] A lithium-ion secondary battery including a positive electrode, a negative electrode, and an electrolyte, wherein at least one of the positive electrode and the negative electrode includes the electrode film according to [11].

### Advantageous Effects of Invention

According to the present invention, a carbon nanotube dispersion liquid having improved dispersibility and viscosity stability can be provided. In addition, a resin composition containing the carbon nanotube dispersion liquid, a mixture slurry, and a lithium-ion secondary battery can be provided.

### Description of Embodiments

Hereinafter, embodiments of the present invention will be described in detail. The scope of the present invention is not limited to the embodiments illustrated herein, and various modifications can be made without departing from the spirit of the present invention.

### <Carbon Nanotube Dispersion Liquid>

A carbon nanotube dispersion liquid of the present invention is a carbon nanotube dispersion liquid containing carbon nanotubes (A), a polyvinyl alcohol (B), and a solvent (C), the carbon nanotube dispersion liquid in which a ratio X/Y satisfies 0.8≤X/Y≤5.5, wherein X represents a storage elastic modulus at a strain of 0.1% of the carbon nanotube dispersion liquid and Y represents a storage elastic modulus at a strain of 1% of the carbon nanotube dispersion liquid. Hereinafter, the carbon nanotube dispersion liquid may be referred to as "CNT dispersion liquid", the carbon nanotubes (A) may be referred to as "CNTs (A)", and the polyvinyl alcohol (B) may be referred to as "PVA (B)".

It is important that in the CNT dispersion liquid of the present invention, a ratio X/Y of X to Y satisfies 0.8≤X/Y≤5.5, wherein X represents a storage elastic modulus at a strain of 0.1% of the carbon nanotube dispersion liquid and Y represents a storage elastic modulus at a strain of 1% of the carbon nanotube dispersion liquid, and the ratio X/Y preferably satisfies 0.9≤X/Y≤5.0, and more preferably satisfies 1.0≤X/Y≤4.0. When the ratio X/Y is less than 0.8, CNTs form a pseudo-aggregated structure, and the surface of a metal electrode coated with a resin composition in which a binder resin is added to the CNT dispersion liquid may be uneven. Meanwhile, when the ratio X/Y is more than 5.5, the dispersibility of CNTs is insufficient, and the viscosity stability of the CNT dispersion liquid is low. The storage elastic modulus X at a strain of 0.1% and the storage elastic modulus Y at a strain of 1% are values measured with a rheometer, and are values measured by a method described in Examples below. The ratio X/Y can be adjusted by the modification species, amount of modification, viscosity-average degree of polymerization, and degree of saponification of the PVA (B), the content of the PVA (B) in the CNT dispersion liquid, the kind of the solvent, and the like.

The content of the CNTs (A) in the CNT dispersion liquid is not particularly limited, and the content of the CNTs (A) is preferably 0.2 to 20 parts by mass, more preferably 0.2 to 10 parts by mass, and still more preferably 0.5 to 5 parts by mass, with respect to 100 parts by mass of the CNT dispersion liquid. When the content of the CNTs (A) falls within the above-mentioned range, the CNTs easily form a conductive network, and the CNT dispersion liquid is more excellent in viscosity.

The content of the PVA (B) in the CNT dispersion liquid is not particularly limited, and the content of the PVA (B) is preferably 1 to 200 parts by mass, more preferably 5 to 100 parts by mass, and still more preferably 10 to 60 parts by mass, with respect to 100 parts by mass of the CNTs (A). When the content of the PVA (B) falls within the above-mentioned range, the aggregation of the CNTs may be further suppressed, and the CNT dispersion liquid is more excellent in viscosity. From the viewpoint of time-dependent viscosity stability of the CNT dispersion liquid, the content of the PVA (B) in the CNT dispersion liquid is preferably 0.01 to 5 parts by mass, more preferably 0.05 to 3 parts by mass, still more preferably 0.08 to 2 parts by mass, and still more preferably 0.1 to 1 parts by mass, with respect to 100 parts by mass of the CNT dispersion liquid.

In order to obtain a CNT dispersion liquid, a treatment of dispersing the CNTs (A) in the solvent (C) is preferably performed. A dispersion device used to perform such a treatment is not particularly limited. As the dispersion device, a dispersion device usually used in dispersion of a pigment or the like may be used. Examples of the dispersion device include, but not limited to, mixers such as a dispersion mixer, a homomixer, and a planetary mixer; homogenizers; colloid mills; media dispersion devices such as a cone mill, a ball mill, and a sand mill; medialess dispersion devices such as a wet jet mill; and other roll mills.

### (Carbon Nanotubes (A))

The CNTs (A) have a shape in which planar graphite is rolled cylindrically, and may be single-walled CNTs, multi-walled CNTs, or a combination thereof. The single-walled CNTs have a structure in which a single layer of graphite is rolled. The multi-walled CNTs have a structure in which two or three or more layers of graphite are rolled. The side walls of the CNTs (A) may have a graphite structure. Alternatively, the CNTs (A) may be CNTs each having a side wall having an amorphous structure. In addition, the CNTs (A) may be surface-treated. The CNTs (A) may be CNT derivatives having a functional group such as a carboxy group. Furthermore, the CNTs (A) may be CNTs including a substance such as an organic compound, a metal atom, or a fullerene.

The shapes of the CNTs (A) are not particularly limited, and may be a needle shape, a cylindrical tube shape, a fishbone shape (fishbone or cup stacked shape), a trump shape (platelet), a coil shape, or the like. Of those, a needle shape and a cylindrical tube shape are preferred. The CNTs (A) may have a single shape or two or more shapes.

Examples of the forms of the CNTs (A) include, but not limited to, graphite whiskers, filamentous carbon, graphite fibers, fine carbon tubes, carbon tubes, carbon fibrils, carbon microtubes, and carbon nanofibers. The CNTs (A) may have a single one of the forms or a combination of two or more thereof.

The fiber lengths of the CNTs (A) are preferably 50 nm or more and 5,000 nm or less, and may be 80 nm or more and 2,000 nm or less, or 100 nm or more and 1,000 nm or less.

The average outer diameter of the CNTs (A) is preferably 2 to 25 nm, more preferably 5 to 20 nm, and still mor preferably 5 to 15 nm. The average outer diameter of the CNTs (A) is determined as follows. First, the CNTs (A) are observed and photographed with a transmission electron microscope. Next, any 300 CNTs (A) are selected in the observation photograph and the outer diameters of the CNTs (A) are measured. The average outer diameter (nm) of the CNTs (A) is then calculated as a number-average outer diameter.

When the CNTs (A) have a cylindrical tube shape, the average diameter of the CNTs (A) is preferably 3 nm or more and 25 nm or less, more preferably 5 nm or more and 20 nm or less, and still more preferably 10 nm or more and 15 nm or less. When the CNTs (A) have a cylindrical tube shape, the average length of the CNTs (A) is preferably 20 nm or more and 100 nm or less, more preferably 30 nm or more and 60 nm or less, and still more preferably 35 nm or more and 50 nm or less.

The CNT dispersion liquid may optionally contain another conductive material in addition to the CNTs (A). Examples of the other conductive material include metals powders such as gold, silver, copper, silver-plated copper powder, silver-copper composite powder, silver-copper alloy, amorphous copper, nickel, chromium, palladium, rhodium, ruthenium, indium, silicon, aluminum, tungsten, molybdenum, and platinum; inorganic substance powders coated with the metals; powders of metal oxides such as silver oxide, indium oxide, tin oxide, zinc oxide, and ruthenium oxide; inorganic substance powders coated with the metal oxides; and carbon materials such as carbon black and graphite. The other conductive materials may be used alone or in combination of two or more thereof. When the other conductive materials are used, carbon black is preferred from the viewpoint of adsorption performance of a dispersant.

A method for producing the CNTs (A) is not particularly limited, and CNTs produced by any method may be used.

### (Polyvinyl Alcohol (B))

The PVA (B) is a polymer having a vinyl alcohol unit as a structural unit. The PVA (B) is obtained by saponification of a vinyl ester-based polymer produced by polymerizing a vinyl ester-based monomer, which is a raw material monomer thereof. The PVA (B) after the saponification may contain a vinyl ester unit in addition to the vinyl alcohol unit.

Examples of the vinyl ester-based monomer include vinyl formate, vinyl acetate, vinyl propionate, vinyl pivalate, and vinyl versatate, and vinyl acetate is suitably used.

In one aspect of the present invention, the PVA (B) preferably has at least one anionic group selected from the group consisting of a carboxy group and a sulfonic acid group.

A method for introducing the anionic group into the PVA (B) is not particularly limited, and it is preferable that in a production process of the PVA (B), a saponified copolymer product having the anionic group be obtained as the PVA (B) by copolymerization of the vinyl ester-based monomer serving as a raw material for the PVA (B) and an unsaturated monomer having the anionic group, followed by saponification. Among the unsaturated monomers having the anionic group, examples of an unsaturated monomer having a carboxy group include fumaric acid, maleic acid, itaconic acid, maleic anhydride, fumaric anhydride, trimellitic anhydride, and itaconic anhydride. Of the monomers, maleic anhydride, a half ester derived from maleic anhydride, and itaconic acid are preferred in terms of availability and copolymerizability. Examples of an unsaturated monomer having a sulfonic acid group include ethylenesulfonic acid, allylsulfonic acid, methallylsulfonic acid, and 2-acrylamido-2-methylpropanesulfonic acid. Of the monomers, 2-acrylamido-2-methylpropanesulfonic acid, allylsulfonic acid, and methallylsulfonic acid are preferred in terms of availability and copolymerizability. In particular, the PVA (B) having the anionic group is preferably at least one selected from the group consisting of a saponified copolymer product of vinyl acetate and itaconic acid, and a saponified copolymer product of vinyl acetate and maleic anhydride from the viewpoint of adjusting the ratio X/Y of the CNT dispersion liquid.

The amount of modification with the anionic group in the PVA (B) having the anionic group is preferably 0.5 mol% or more and 10 mol% or less, more preferably 1 mol% or more and 8 mol% or less, and still more preferably 3 mol% or more and 7 mol% or less. When the amount of modification with the anionic group in the PVA (B) falls within the above-mentioned range, the dispersibility of carbon nanofibers is more excellent, the resistance of a lithium-ion secondary battery is lower, and for example, the solubility in a solvent such as N-methyl-2-pyrrolidone (NMP) is more excellent, which facilitates the adjustment of a carbon nanofiber slurry. The amount of modification with the anionic group in the PVA (B) means the proportion of a monomer unit having the anionic group to all monomer units in the PVA (B) having the anionic group.

In another preferable aspect of the present invention, the PVA (B) preferably has a quaternary ammonium salt group.

A method for introducing the quaternary ammonium salt group into the PVA (B) is not particularly limited, and it is preferable that in a production process of the PVA (B), a saponified copolymer product having the quaternary ammonium salt group be obtained as the PVA (B) by copolymerization of a vinyl ester-based monomer serving as a raw material for the PVA (B) and an unsaturated monomer having the quaternary ammonium salt group, followed by saponification. Examples of the unsaturated monomer having the quaternary ammonium salt group include trimethyl-3-(1-(meth(acrylamide-1,1-dimethylpropyl)ammonium chloride, trimethyl-3-(1-(meth(acrylamide-1,1-dimethylethyl)ammonium chloride, trimethyl-3-[(methacryloylamino)propyl)]ammonium chloride, quaternized N-vinylimidazole, and quaternized N-vinyl-N-methylimidazole. Of the monomers, trimethyl-3-[(methacryloylamino)propyl)]ammonium chloride is preferred in terms of availability and copolymerizability. In particular, from the viewpoint of adjusting the ratio X/Y of the CNT dispersion liquid, the PVA (B) having the quaternary ammonium salt group is preferably a saponified copolymer product of vinyl acetate and trimethyl-3-[(methacryloylamino)propyl)]ammonium chloride.

The amount of modification with the quaternary ammonium salt group in the PVA (B) is preferably 0.1 mol% or more and 10 mol% or less, more preferably 1 mol% or more and 8 mol% or less, and still more preferably 3 mol% or more and 7 mol% or less. When the amount of modification with the quaternary ammonium salt group in the PVA (B) falls within the above-mentioned range, the dispersibility of CNTs is more excellent, the resistance of a lithium-ion secondary battery is lower, and the solubility in NMP used as a solvent is more excellent, which facilitates the adjustment of the CNT dispersion liquid. The amount of modification with the quaternary ammonium salt group in the PVA (B) means the proportion of a monomer unit having the quaternary ammonium salt group to all monomer units in the PVA (B) having the quaternary ammonium salt group.

As described above, the PVA (B) having the anionic group or the quaternary ammonium salt group can be obtained, for example, by polymerization of an unsaturated monomer having the anionic group and/or the quaternary ammonium salt group with the vinyl ester-based monomer followed by saponification.

In (co)polymerization of the vinyl ester-based monomer, a known method such as a bulk polymerization method, a solution polymerization method, a suspension polymerization method, or an emulsion polymerization method can be adopted. Of those, a bulk polymerization method in which polymerization is performed without a solvent or a solution polymerization method in which polymerization is performed in a solvent such as an alcohol is generally adopted, and when a polymer having a high degree of polymerization is obtained, an emulsion polymerization method is adopted. Examples of an alcohol used as a solvent in solution polymerization include lower alcohols such as methanol, ethanol, and propanol. Of those, methanol is suitably used. Examples of an initiator used in polymerization include known initiators including azo-based initiators such as 2,2'-azobisisobutyronitrile, 2,2'-azobis(2,4-dimethylvaleronitrile), and 2,2'-azobis(4-methoxy-2,4-dimethylvaleronitrile); and peroxide-based initiators such as benzoyl peroxide and n-propyl peroxydicarbonate. The polymerization temperature is not particularly restricted, and suitably falls within the range of -30 to 150°C.

As a method for saponifying the vinyl ester-based polymer, any of conventionally known methods is suitably used, but a saponification method using an alkaline catalyst or an acidic catalyst in an alcohol solution of the vinyl ester-based polymer is generally adopted. An alcohol used as a saponification solvent is suitably methanol. In addition, not only a substance free from water but also a substance containing a small amount of water is used as the saponification solvent according to purposes, and a substance containing another organic solvent such as methyl acetate or ethyl acetate may be used. The saponification temperature is generally selected from the range of 10 to 70°C. The saponification catalyst is preferably an alkaline catalyst such as sodium hydroxide, potassium hydroxide, sodium methoxide, or potassium methoxide. The usage amount of the saponification catalyst is appropriately determined depending on the intended degree of saponification, the intended moisture concentration, and the like, and it is desirable that the molar ratio with respect to the vinyl ester unit in the polymer be 0.001 or more, and preferably 0.002 or more.

The degree of saponification of the PVA (B) is preferably 82 mol% or more and 95 mol% or less, more preferably 83 mol% or more and 93 mol% or less, still more preferably 84 mol% or more and 92 mol% or less, still more preferably 84 mol% or more and less than 90 mol%, and particularly preferably 84 mol% or more and 89 mol% or less. When the degree of saponification of the PVA (B) falls within the above-mentioned range, the adsorption performance of the PVA (B) on CNTs is higher, the dispersion stability of CNTs is more excellent, and the solubility of the PVA (B) in the solvent is higher, which facilitates the preparation of the CNT dispersion liquid. The degree of saponification of PVA is a value measured in accordance with JIS K 6726:1994.

The viscosity-average degree of polymerization (hereinafter also simply referred to as degree of polymerization) of the PVA (B) is preferably 250 or more and 450 or less, more preferably 260 or more and 370 or less, and still more preferably 270 or more and 350 or less. When the degree of polymerization falls within the above-mentioned range, an adsorption layer of the PVA (B) adsorbed on CNTs is thicker, the dispersibility of CNTs is more excellent, and the CNT dispersion liquid has a more moderate viscosity, which facilitates the formation of an uniform film. The viscosity-average degree of polymerization of PVA is a value measured in accordance with JIS K 6726:1994.

The PVA (B) may contain another monomer unit in addition to the vinyl alcohol unit, the vinyl ester unit, the unsaturated monomer having the anionic group, and the unsaturated monomer having the quaternary ammonium salt group. Examples of the other monomer include α-olefins such as ethylene, propylene, n-butene, and isobutylene; (meth)acrylic acid esters such as methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-ethylhexyl (meth)acrylate, dodecyl (meth)acrylate, and octadecyl (meth)acrylate; (meh)acrylamide-based compounds such as (meth)acrylamide, N-methyl(meth)acrylamide, N-ethyl(meth)acrylamide, N,N-dimethyl(meth)acrylamide, diacetone (meth)acrylamide, N-methylol (meth)acrylamide, and derivatives thereof; vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; nitriles such as acrylonitrile and methacrylonitrile; vinyl halides such as vinyl chloride and vinyl fluoride; vinylidene halides such as vinylidene chloride and vinylidene fluoride; allyl compounds such as allyl acetate and allyl chloride; and isopropenyl acetate. The other monomers may be used alone or in combination of two or more thereof. The content of the other monomer unit is preferably 10 mol% or less with respect to all the monomer units in the PVA (B). In the present disclosure, "(meth)acryl" is a generic term for methacryl and acryl.

The total content of the vinyl alcohol unit and the vinyl ester unit in the PVA (B) may be 80 mol% or more, 90 mol% or more, 95 mol% or more, 98 mol% or more, or 99 mol% or more with respect to all monomer units. The PVA (B) may be a PVA having no carboxy group, a PVA having no sulfonic acid group, or a PVA having no quaternary ammonium salt group.

### (Solvent (C))

The solvent (C) is not particularly limited as long as it is capable of dispersing the CNTs (A), and may be at least one selected from the group consisting of water and an organic solvent. The solvent (C) may be a mixed solvent including two or more organic solvents, or a mixed solvent including water and one or more organic solvents. The solvent (C) is preferably an organic solvent, and more preferably a water-soluble organic solvent.

Examples of the water-soluble organic solvent include a monohydric alcohol-based organic solvent (methanol, ethanol, propanol, isopropanol, butanol, isobutanol, sec-butanol, tert-butanol, benzyl alcohol, etc.), a polyhydric alcohol-based organic solvent (ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol, etc.), a polyhydric alcohol ether-based organic solvent (ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monomethyl ether, propylene glycol monoethyl ether, propylene glycol monobutyl ether, ethylene glycol monomethyl ether acetate, triethylene glycol monomethyl ether, triethylene glycol monoethyl ether, triethylene glycol monobutyl ether, ethylene glycol monophenyl ether, propylene glycol monophenyl ether, etc.), an amine-based organic solvent (ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, tetramethylpropylenediamine, etc.), an amide-based organic solvent (N-methyl-2-pyrrolidone (NMP), N-ethyl-2-pyrrolidone (NEP), N,N-dimethylformamide, N,N-dimethylacetamide, N,N-diethylacetamide, N-methylcaprolactam, etc.), a heterocyclic organic solvent (cyclohexylpyrrolidone, 2-oxazolidone, 1,3-dimethyl-2-imidazolidinone, γ-butyrolactone, etc.), a sulfoxide-based organic solvent (dimethylsulfoxide, etc.), a sulfone-based organic solvent (hexamethyl phosphortriamide, sulfolane, etc.), a lower ketone-based organic solvent (acetone, methyl ethyl ketone, etc.), tetrahydrofuran, urea, acetonitrile, or the like can be used. Of those, an amide-based organic solvent is more preferred, and of amide-based organic solvents, N-methyl-2-pyrrolidone and N-ethyl-2-pyrrolidone are particularly preferred. From the viewpoint of battery performance and handleability, the content of the amide-based organic solvent is preferably 50 parts by mass or more, more preferably 60 parts by mass or more, still more preferably 70 parts by mass or more, still more preferably 80 parts by mass or more, particularly preferably 90 parts by mass or more, and more particularly preferably 95 parts by mass or more, with respect to 100 parts by mass of the CNT dispersion liquid. In addition, the content of the amide-based organic solvent may be 99 parts by mass or less with respect to 100 parts by mass of the CNT dispersion liquid. In one embodiment, the content of N-methyl-2-pyrrolidone preferably falls within the above-mentioned range. In one embodiment, from the viewpoint of battery performance and handleability, the content of water contained in the CNT dispersion liquid is preferably 90 parts by mass or less, more preferably 50 parts by mass or less, still more preferably 30 parts by mass or less, still more preferably 10 parts by mass or less, and particularly preferably 0 part by mass, with respect to 100 parts by mass of the CNT dispersion liquid, that is, it is particularly preferable that the CNT dispersion liquid substantially contain no water.

### <Resin Composition>

A resin composition according to one embodiment of the present invention contains the above-mentioned CNT dispersion liquid and a binder resin (D), that is, contains the CNTs (A), the PVA (B), the solvent (C), and a binder resin (D).

In order to obtain the resin composition of the present invention, it is preferable that the carbon nanotube dispersion liquid and the binder resin (D) be mixed and uniformized. As a mixing method, various conventionally known methods can be performed. The resin composition can be produced by using the dispersion device described in the section of carbon nanotube dispersion liquid.

### (Binder Resin (D))

Examples of the binder resin (D) include a (co)polymer obtained by (co)polymerizing at least one monomer selected from the group consisting of ethylene, propylene, vinyl chloride, vinyl acetate, vinyl alcohol, maleic acid, acrylic acid, an acrylic acid ester, methacrylic acid, a methacrylic acid ester, acrylonitrile, styrene, vinyl butyral, vinyl acetal, and vinyl pyrrolidone; a polyurethane resin, a polyester resin, a phenol resin, an epoxy resin, a phenoxy resin, a urea resin, a melamine resin, an alkyd resin, an acrylic resin, a formaldehyde resin, a silicone resin, and a fluororesin; a cellulose resin such as carboxymethyl cellulose; rubbers such as a styrene-butadiene rubber and a fluorine rubber; and conductive resins such as polyaniline and polyacetylene. In addition, a polymer compound having a fluorine atom in the molecule, for example, polyvinylidene fluoride (PVDF), polyvinyl fluoride, and tetrafluoroethylene, is preferred in terms of tolerance. Alternatively, the binder resin (D) may be a modified product or mixture of the resins or a copolymer.

The weight-average molecular weight of the binder resin (D) is preferably 10,000 to 2,000,000, more preferably 100,000 to 1,000,000, and still more preferably 200,000 to 1,000,000. When the weight-average molecular weight falls within the above-mentioned range, the binder resin has more excellent adhesiveness.

### <Mixture Slurry>

A mixture slurry according to one embodiment of the present invention contains the above-mentioned resin composition and an active material (E), that is, contains the CNTs (A), the PVA (B), the solvent (C), the binder resin (D), and an active material (E).

In order to obtain the mixture slurry, a treatment of adding an active material (E) to the above-mentioned resin composition and then dispersing the mixture is preferably performed. A dispersion device used to perform such a treatment is not particularly limited. The mixture slurry can be obtained by using the dispersion device described in the section of carbon nanotube dispersion liquid.

The amount of the active material (E) in the mixture slurry is preferably 20 to 85 mass%, and more preferably 40 to 85 mass%, with respect to 100 mass% of the mixture slurry.

The amount of the CNTs (A) in the mixture slurry is preferably 0.05 to 10 parts by mass, more preferably 0.1 to 5 parts by mass, and still more preferably 0.1 to 3 parts by mass, with respect to 100 parts by mass of the active material (E).

The amount of the binder resin (D) in the mixture slurry is preferably 0.5 to 20 parts by mass, more preferably 1 to 10 parts by mass, and particularly preferably 1 to 5 parts by mass, with respect to 100 parts by mass of the active material (E).

### (Active Material (E))

The active material (E) is a material serving as a basis of a battery reaction. The active material (E) is classified into a positive electrode active material and a negative electrode active material in accordance with magnitude of electromotive force.

The positive electrode active material is not particularly limited, but a metal compound such as a metal oxide or a metal sulfide that is capable of being doped with lithium ions or intercalation, a conductive polymer, or the like can be used. Examples thereof include inorganic compounds, such as oxides of metals such as Al, Fe, Co, Ni, and Mn, a composite oxide of lithium, and a transition metal sulfide. Specific examples thereof include transition metal oxide powders such as MnO, V₂O₅, V₆O₁₃, and TiO₂; composite oxide powders of lithium and a transition metal, such as lithium nickelate having a layered structure, lithium cobaltate, lithium manganate, and lithium manganate having a spinel structure; a lithium iron phosphate-based material that is a phosphoric acid compound having an olivine structure; and transition metal sulfide powders such as TiS₂ and FeS. In addition, a conductive polymer such as polyaniline, polyacetylene, polypyrrole, or polythiophene, can also be used. Furthermore, the above-mentioned inorganic compound or organic compound may be mixed for use. In a preferable aspect of the positive electrode active material, a composite oxide of lithium and a metal such as Al, Fe, Co, Ni, or Mn, is preferred, a composite oxide of lithium and any of Al, Co, Ni, or Mn is more preferred, a composite oxide of lithium and Co, Ni, and/or Mn is still more preferred, and of these, lithium cobaltate (LiCoO₂) is particularly preferred. When the active materials are used, a more excellent effect can be obtained.

The negative electrode active material is not particularly limited as long as it is capable of being doped with lithium ions or intercalation. Examples of the negative electrode active material include lithium metal, alloys such as a lithiumtin alloy, a lithium-silicon alloy, and a lithium-lead alloy; metal oxides such as LiₓFe₂O₃, LiₓFe₃O₄, lithium titanate, lithium vanadate, and lithium silicate; conductive polymers such as polyacetylene and poly-p-phenylene; and carbon-based materials including amorphous carbonaceous materials such as soft carbon and hard carbon, carbonaceous powder of artificial graphite such as a highly graphitized carbon material or natural graphite, carbon black, mesophase carbon black, a carbon material obtained by firing resin, vapor-grown carbon fibers, and carbon fibers. The negative electrode active materials can be used alone or in combination of a plurality thereof.

The BET specific surface area of the active material (E) is preferably 0.1 to 10 m²/g, more preferably 0.2 to 5 m²/g, and still more preferably 0.3 to 3 m²/g.

The average particle diameter of the active material (E) is preferably within the range of 0.05 to 100 µm, and more preferably within the range of 0.1 to 50 µm. Here, the average particle diameter of the active material (E) is the average value of particle diameters measured with an electron microscope.

### <Electrode Film>

An electrode film that is an embodiment of the present invention is a film formed from the mixture slurry, and may be, for example, a coating film that is an electrode mixture layer formed by applying the mixture slurry to a current collector, followed by drying. In one embodiment, the electrode film may be an electrode film containing the CNTs (A), the PVA (B), the binder resin (D), and the active material (E).

The material and shape of a current collector used for the electrode film are not particularly limited, and can be appropriately selected in accordance with various secondary batteries. Examples of the material for the current collector include metals such as aluminum, copper, nickel, and titanium, and alloys such as stainless. In addition, a flat foil is generally used as the shape, and a current collector having a roughened surface, a current collector having a perforated foil shape, or a meshed current collector can also be used.

A method for applying the mixture slurry to the current collector is not particularly limited, and a known method can be used. Specific examples of the method include a die coating method, a dip coating method, a roll coating method, a doctor coating method, a knife coating method, a spray coating method, a gravure coating method, a screen printing method, and an electrostatic coating method. As a drying method, drying by standing, an air dryer, a hot-air dryer, an infrared-radiation heater, a far-infrared-radiation heater, or the like can be used, but the method is not limited thereto.

In addition, after the mixture slurry is applied to the current collector, a rolling treatment with a flat press, a calender roll, or the like may be performed. The thickness of the electrode mixture layer is preferably 1 to 500 µm, and more preferably 10 to 300 µm.

### <Lithium-ion Secondary Battery>

A lithium-ion secondary battery according to one embodiment of the present invention includes a positive electrode, a negative electrode, and an electrolyte in which lithium ions are movable, and at least one of the positive electrode or the negative electrode includes the above-mentioned electrode film. The lithium-ion secondary battery may be a lithium-ion secondary battery using an electrolyte solution in which an electrolyte is dissolved in a non-aqueous solvent.

As the positive electrode, an electrode film produced by applying and drying a mixture slurry containing a positive electrode active material can be used.

As the negative electrode, an electrode film produced by applying and drying a mixture slurry containing a negative electrode active material can be used.

As the electrolyte, various conventionally known electrolytes can be used. Examples thereof include, but not limited to, LiBF₄, LiClO₄, LiPF₆, LiAsF₆, LiSbF₆, LiCF₃SO₃, Li(CF₃SO₂)₂N, LiC₄F₉SO₃, Li(CF₃SO₂)₃C, LiI, LiBr, LiCl, LiAlCl, LiHF₂, LiSCN, and LiBPh₄ (provided that Ph represents a phenyl group).

Examples of the non-aqueous solvent include, but not particularly limited to, carbonates such as ethylene carbonate, propylene carbonate, butylene carbonate, dimethyl carbonate, ethylmethyl carbonate, and diethyl carbonate; lactones such as γ-butyrolactone, γ-valerolactone, and γ-octanoic lactone; glymes such as tetrahydrofuran, 2-methyltetrahydrofuran, 1,3-dioxolane, 4-methyl-1,3-dioxolane, 1,2-methoxyethane, 1,2-ethoxyethane, and 1,2-dibutoxyethane; esters such as methyl formate, methyl acetate, and methyl propionate; sulfoxides such as dimethylsulfoxide and sulfolane; and nitriles such as acetonitrile. The solvents may be used alone or as a mixture of two or more thereof.

The lithium-ion secondary battery preferably includes a separator. The separator is preferably a nonwoven fabric or a film containing at least one selected from the group consisting of, for example, polyethylene, polypropylene, and polyamide, and the nonwoven fabric or the film may be subjected to a hydrophilic treatment. For example, the separator is preferably a porous polypropylene film.

The structure of the lithium-ion secondary battery is not particularly limited, and the lithium-ion secondary battery generally includes the positive electrode and the negative electrode, and the separator disposed as required, and may have various shapes depending on use purposes, such as a paper shape, a cylindrical shape, a button shape, and a laminate shape.

A preferable embodiment of the present invention is a carbon nanotube dispersion liquid containing carbon nanotubes (A), a polyvinyl alcohol (B), and a solvent (C), the carbon nanotube dispersion liquid in which a ratio X/Y satisfies 0.8≤X/Y≤5.5, wherein X represents a storage elastic modulus at a strain of 0.1% of the carbon nanotube dispersion liquid and Y represents a storage elastic modulus at a strain of 1% of the carbon nanotube dispersion liquid, and the polyvinyl alcohol (B) is at least one selected from the group consisting of a polyvinyl alcohol having a quaternary ammonium salt group (preferably a saponified copolymer product of vinyl acetate and trimethyl-3-[(methacryloylamino)propyl)]ammonium chloride), a saponified copolymer product of vinyl acetate and itaconic acid, and a saponified copolymer product of vinyl acetate and maleic anhydride.

In addition, a preferable embodiment of the present invention is a carbon nanotube dispersion liquid containing carbon nanotubes (A), a polyvinyl alcohol (B), and a solvent (C), the carbon nanotube dispersion liquid in which a ratio X/Y satisfies 0.8≤X/Y≤5.5, wherein X represents a storage elastic modulus at a strain of 0.1% of the carbon nanotube dispersion liquid and Y represents a storage elastic modulus at a strain of 1% of the carbon nanotube dispersion liquid, the polyvinyl alcohol (B) is at least one selected from the group consisting of a polyvinyl alcohol having a quaternary ammonium salt group (preferably a saponified copolymer product of vinyl acetate and trimethyl-3-[(methacryloylamino)propyl)]ammonium chloride), a saponified copolymer product of vinyl acetate and itaconic acid, and a saponified copolymer product of vinyl acetate and maleic anhydride, the solvent (C) contains an amide-based organic solvent (preferably N-methyl-2-pyrrolidone), and the amount of the amide-based organic solvent (preferably N-methyl-2-pyrrolidone) is 50 parts by mass or more (preferably 60 parts by mass or more, 70 parts by mass or more, 80 parts by mass or more, 90 parts by mass or more, or 95 parts by mass or more) with respect to 100 parts by mass of the carbon nanotube dispersion liquid.

In addition, a preferable embodiment of the present invention is a carbon nanotube dispersion liquid containing carbon nanotubes (A), a polyvinyl alcohol (B), and a solvent (C), the carbon nanotube dispersion liquid in which a ratio X/Y satisfies 0.8≤X/Y≤5.5, wherein X represents a storage elastic modulus at a strain of 0.1% of the carbon nanotube dispersion liquid and Y represents a storage elastic modulus at a strain of 1% of the carbon nanotube dispersion liquid, the polyvinyl alcohol (B) is at least one selected from the group consisting of a polyvinyl alcohol having a quaternary ammonium salt group (preferably a saponified copolymer product of vinyl acetate and trimethyl-3-[(methacryloylamino)propyl)]ammonium chloride), a saponified copolymer product of vinyl acetate and itaconic acid, and a saponified copolymer product of vinyl acetate and maleic anhydride, the solvent (C) contains an amide-based organic solvent (preferably N-methyl-2-pyrrolidone), the amount of the amide-based organic solvent (preferably N-methyl-2-pyrrolidone) is 50 parts by mass or more (preferably 60 parts by mass or more, 70 parts by mass or more, 80 parts by mass or more, 90 parts by mass or more, or 95 parts by mass or more) with respect to 100 parts by mass of the carbon nanotube dispersion liquid, and the content of water contained in the carbon nanotube dispersion liquid is 90 parts by mass or less (preferably 50 parts by mass or less, 30 parts by mass or less, 10 parts by mass or less, or 0 part by mass) with respect to 100 parts by mass of the carbon nanotube dispersion liquid.

### Examples

Hereinafter, the present invention is described in detail with reference to Examples, but the present invention is not limited to the following examples unless the present invention departs from the gist thereof. In Examples, an unsaturated monomer having an anionic group or a cationic group for introducing the anionic group or the cationic group into a PVA (B) is sometimes referred to as "modification species". Unless particularly noted, "part(s)" represents "part(s) by mass", and "%" represents "mass%".

### [Measurement of Viscosity of CNT Dispersion Liquid]

A CNT dispersion liquid was left to stand in a constant-temperature bath at 20°C for 1 hour or more, and then sufficiently stirred, and the viscosity was measured at a stirring speed of 60 rpm with a viscometer (manufactured by TOKI SANGYO CO., LTD., VISCOMETER, MODEL BL). A lower viscosity indicates more excellent dispersibility.

### [Time-Dependent Viscosity Stability of CNT Dispersion Liquid]

A ratio β/α of a viscosity β after the CNT dispersion liquid was left to stand at 20°C for 7 days to a viscosity α immediately after preparation of the CNT dispersion liquid was determined, and the time-dependent viscosity stability was evaluated in the following four levels from the resultant values of β/α.
A⁺: 1 or more and less than 1.2
A: 1.2 or more and less than 1.5
B: 1.5 or more and less than 2.0
C: 2.0 or more

### [Measurement of Storage Elastic Modulus of CNT Dispersion Liquid]

A CNT dispersion liquid was left to stand in a constant-temperature bath at 20°C for 1 hour, and then sufficiently stirred, and the storage elastic modulus X at a strain of 0.1% and the storage elastic modulus Y at a strain of 1% were measured with a rheometer (MCR102: manufactured by Anton Paar GmbH). A measurement plate PP50 was used. The ratio X/Y was calculated from the resultant respective storage elastic moduli X and Y.

### [Measurement of Alternating-current Resistance of Lithium-ion Secondary Battery]

A coin-type lithium-ion secondary battery was charged at a rate of 0.1 C and then held at a SOC of 100% for 1 hour with a Solartron 1480 potentiostat manufactured by Solartron Analytical, and evaluated for AC resistance with an AC impedance analyzer. The AC resistance was fitted to an appropriate equivalent circuit, and negative-electrode resistance was separated and evaluated. After that, the lithium-ion secondary battery was discharged at a rate of 0.1 C. The charge capacity and the discharge capacity were measured at an upper limit potential of 4.2 V and a lower limit potential of 2.7 V. The voltage at a SOC of 50% was determined as an average voltage during discharge.

### [Synthesis of PVA 1]

Into a 5 L reactor equipped with a reflux condenser, a stirrer, a thermometer, a nitrogen inlet tube, a post-addition liquid inlet, and a pump, 448 parts of vinyl acetate, 1,152 parts of methanol, and 2.1 parts of itaconic acid were put. The system was purged with nitrogen while stirring the polymerization solution. The polymerization solution was heated. When the polymerization solution was in a constant-temperature state at 60°C, 1.3 parts of 2,2'-azobisisobutyronitrile (hereinafter sometimes abbreviated as AIBN) was added to initiate polymerization. A reaction was performed while adding 71 parts of methanol solution containing 3% itaconic acid to the system from the initiation of polymerization and while analyzing the solid content concentration of the system. After 5 hours, the reactor was cooled to terminate the polymerization. The polymerization ratio at the termination of the polymerization was 65%. The resultant polymerization paste was added dropwise to n-hexane to precipitate a polymer. A reprecipitation-purification operation of collecting the precipitated polymer, dissolving the polymer in acetone, and precipitating the polymer in n-hexane was performed three times. Furthermore, the polymer was dissolved in acetone, the solution was added dropwise to distilled water, and the resultant was purified by boiling, and then dried at 60°C to obtain a purified polyvinyl acetate (hereinafter sometimes abbreviated as PVAc).

Next, a 45% solution of the purified PVAc in methanol was prepared. While stirring the solution of the purified PVAc in methanol at 40°C, a 10% solution of sodium hydroxide in methanol was added so that the molar ratio of sodium hydroxide to a vinyl acetate unit in PVAc was 0.03, and a saponification reaction was performed for 60 minutes. The resultant gel-like product was pulverized, subjected to Soxhlet washing with methanol for 3 days, and then dried under reduced pressure at 80°C for 3 days to obtain a purified PVA. The degree of saponification of the PVA was measured in accordance with JIS K 6726 as an ordinary method. The degree of saponification was 88 mol%. In proton NMR spectrum measurement, the amount of modification with itaconic acid in the purified PVA with respect to the whole monomer unit was 0.5 mol%. Hereinafter, the PVA (B) obtained in the foregoing is referred to as PVA 1.

### [Synthesis of PVA 2 to PVA 14]

PVA 2 to PVA 14 were prepared in the same manner as Synthesis of PVA 1 except that the conditions of a polymerization reaction (the preparation amounts of vinyl acetate and methanol, the kind and amount of modification species, polymerization ratio) and a saponification condition were changed as shown in Table 1. The characteristics of the resultant PVAs are shown in Table 1. In Table 1, itaconic acid is denoted as "IA", maleic anhydride is denoted as "Man", and trimethyl-3-[(methacryloylamino)propyl)]ammonium chloride is denoted as "MPATAC".

### [Example 1]

### (Preparation of CNT Dispersion Liquid and Measurement of Physical Properties)

1.0 Part of multi-walled carbon nanotubes ("LUCAN BT1003M" manufactured by LG Chem Ltd.; average diameter: 12 nm, average length: 40 µm) as CNTs (A), 0.4 part of PVA 1, and 98.6 parts of N-methyl-2-pyrrolidone (NMP) as a solvent (C) were put in a glass bottle, a dispersion treatment was performed with zirconia beads (bead diameter: 0.5 mm) using a paint conditioner for 8 hours, and the zirconia beads were separated to obtain a CNT dispersion liquid 1. With regard to the CNT dispersion liquid 1, the storage elastic modulus X at a strain of 0.1% was 0.16 Pa, the storage elastic modulus Y at a strain of 1% was 0.03 Pa, and the ratio X/Y was 5.3. The viscosity of the resultant CNT dispersion liquid 1 was 36 mPa·s. In addition, the time-dependent viscosity stability evaluation was rated as B. The results are shown in Table 2.

### [Examples 2 to 11 and Comparative Examples 1 to 5]

CNT dispersion liquids 2 to 16 were obtained in the same manner as in Example 1 except that the kinds and contents of CNTs (A), a PVA (B), and a solvent (C) were changed to those in Table 2. The viscosity, time-dependent viscosity stability, and storage elastic modulus of the resultant CNT dispersion liquids were measured. The results are shown in Table 2.

### [Example 12]

### (Preparation of Mixture Slurry)

10.6 Parts by mass of a PVDF solution obtained by dissolving PVDF ("Kureha's KF Polymer (registered trademark) W1100" manufactured by Kureha Corporation) serving as a binder resin (D) in NMP and adjusting the concentration to 8 mass% was weighed in a 150 cm³ plastic container. After that, 0.5 part by mass of the CNT dispersion liquid 1 was added, and the mixture was stirred with a planetary centrifugal mixer ("AWATORI RENTARO (registered trademark) ARE-310" manufactured by THINKY CORPORATION) at 2,000 rpm for 30 seconds. Furthermore, 6.5 parts by mass of the CNT dispersion liquid 1 was added, and the mixture was stirred with the above-mentioned mixer at 2,000 rpm for 30 seconds to obtain a resin composition of CNTs. After that, 55.1 parts by mass of lithium cobaltate (LiCoO₂) ("HLC-22" manufactured by Honjo Chemical Corporation; average particle diameter: 6.6 µm, specific surface area: 0.62 m²/g) serving as a positive electrode active material was added as an active material (E), and the mixture was stirred with the mixer at 2,000 rpm for 2.5 minutes. 2.3 Parts by mass of NMP was finally added, and the mixture was stirred with the mixer at 2,000 rpm for 2.5 minutes to obtain a mixture slurry.

### (Production of Electrode Film)

The above-mentioned mixture slurry was applied to an aluminum foil with an applicator so that the coating weight per unit area of an electrode was 20 mg/cm², and a coating film was dried in an electric oven at 120°C±5°C for 25 minutes to obtain an electrode film.

### (Production of Lithium-ion Secondary Battery)

The above-mentioned electrode film was rolled with a roll press (manufactured by THANK-METAL CO., LTD., 3 t hydraulic roll press) to produce a positive electrode in which the density of a mixture layer was 3.1 g/cm³. This positive electrode and a negative electrode (lithium foil) were punched into a desired size, a separator (porous polypropylene film) was placed between the positive electrode and the negative electrode, and the laminate was dried in an electric oven at 60°C for 1 hour. After that, in a glove box filled with argon gas, 2 mL of an electrolysis composition (a non-aqueous electrolysis composition in which LiPF₆ was dissolved at a concentration of 1 M in a mixed solvent in which ethylene carbonate, dimethyl carbonate, and diethyl carbonate were mixed at a ratio of 1:1:1 (by volume)) was injected into the laminate, and the laminate was placed in a coin-type battery cell holder, and sealed using a crimping machine to produce a lithium-ion secondary battery. The alternating-current resistance of the resultant lithium-ion secondary battery was 8.8 Ω.

### [Examples 13 to 22 and Comparative Examples 6 to 10]

Lithium-ion secondary batteries were obtained in the same manner as in Example 12 except that the kind of the CNT dispersion liquid was changed to those in Table 3. The alternating-current resistances of the resultant lithium-ion secondary batteries were measured. The results are shown in Table 3.

The results in Table 2 show that the CNT dispersion liquids in which the ratio X/Y of the storage elastic modulus X at a strain of 0.1% to the storage elastic modulus Y at a strain of 1% satisfies 0.8≤X/Y≤5.5 have a low viscosity, excellent dispersibility, and excellent time-dependent viscosity stability (Examples 1 to 11). Meanwhile, the results show that the CNT dispersion liquids in which the ratio X/Y is more than 5.5 have lower time-dependent viscosity stability (Comparative Examples 1 to 5).

The results in Table 3 show that the lithium-ion secondary batteries produced using the CNT dispersion liquids in which the ratio X/Y satisfies 0.8≤X/Y≤5.5 have low alternating-current resistances (Examples 12 to 22). Meanwhile, the results show that the lithium-ion secondary batteries produced using the CNT dispersion liquids in which the ratio X/Y does not satisfy 0.8≤X/Y≤5.5 have high alternating-current resistances (Comparative Examples 6 to 10).

**[Table 1]**

| PVA (B) | Polymerization conditions | | | | | Saponification condition | Analysis results of PVA | | |
|---|---|---|---|---|---|---|---|---|---|
| | Vinyl acetate | Methanol | Modification species | | Polymerization ratio | NaOH Addition amount | Viscosity-average degree of polymerization | Degree of saponification | Amount of modification |
| | (Part) | (Part) | Kind | (Part) | (%) | (Molar ratio) | - | (mol%) | (mol%) |
| PVA 1 | 448 | 1152 | IA | 2.1 | 65 | 0.03 | 300 | 88 | 0.5 |
| PVA 2 | 440 | 1160 | None | 0 | 65 | 0.01 | 300 | 88 | 0 |
| PVA 3 | 448 | 1152 | IA | 8.5 | 65 | 0.04 | 300 | 88 | 2.0 |
| PVA 4 | 448 | 1152 | IA | 21.3 | 65 | 0.07 | 300 | 88 | 5.0 |
| PVA 5 | 448 | 1152 | Man | 8.3 | 65 | 0.06 | 300 | 93 | 2.0 |
| PVA 6 | 448 | 1152 | MAPTAC | 3.4 | 65 | 0.01 | 300 | 88 | 0.5 |
| PVA 7 | 448 | 1152 | MAPTAC | 33.9 | 65 | 0.01 | 300 | 88 | 5.0 |
| PVA 8 | 448 | 1152 | IA | 8.5 | 65 | 0.03 | 300 | 84 | 2.0 |
| PVA 9 | 400 | 1200 | IA | 7.6 | 65 | 0.04 | 260 | 88 | 2.0 |
| PVA 10 | 320 | 1280 | None | 0 | 70 | 0.01 | 200 | 88 | 0 |
| PVA 11 | 672 | 928 | None | 0 | 60 | 0.01 | 550 | 88 | 0 |
| PVA 12 | 448 | 1152 | IA | 2.1 | 65 | 0.04 | 300 | 98 | 0.5 |
| PVA 13 | 448 | 1152 | IA | 2.1 | 65 | 0.02 | 300 | 80 | 0.5 |
| PVA 14 | 672 | 928 | IA | 5.9 | 60 | 0.02 | 550 | 75 | 1.0 |

**[Table 2]**

| | CNT dispersion liquid | CNT (A) | | PVA (B) | | Solvent (C) | | Storage elastic modulus (Pa) | | | Viscosity (mPa·s) | Time-dependent viscosity stability |
|---|---|---|---|---|---|---|---|---|---|---|---|---|
| | | Kind | Content (Part by mass) | Kind | Content with respect to CNT ¹⁾ (Part by mass) | Kind | Content (Part by mass) | X at a strain of 0.1% | Y at a strain of 1% | X/Y | | |
| Example 1 | CNT dispersion liquid 1 | BT1003M | 1 | PVA 1 | 40 | NMP ²⁾ | 98.6 | 0.16 | 0.03 | 5.3 | 36 | B |
| Example 2 | CNT dispersion liquid 2 | BT1003M | 1 | PVA 2 | 40 | NMP | 98.6 | 0.16 | 0.03 | 5.3 | 37 | B |
| Example 3 | CNT dispersion liquid 3 | BT1003M | 1 | PVA 3 | 40 | NMP | 98.6 | 0.11 | 0.03 | 3.7 | 35 | A |
| Example 4 | CNT dispersion liquid 4 | BT1003M | 1 | PVA 4 | 8 | NMP | 98.9 | 0.41 | 0.08 | 5.1 | 40 | B |
| Example 5 | CNT dispersion liquid 5 | BT1003M | 1 | PVA 4 | 40 | NMP | 98.6 | 0.04 | 0.03 | 1.3 | 30 | A⁺ |
| Example 6 | CNT dispersion liquid 6 | BT1003M | 1 | PVA 4 | 150 | NMP | 97.5 | 0.61 | 0.12 | 5.1 | 43 | B |
| Example 7 | CNT dispersion liquid 7 | BT1003M | 1 | PVA 5 | 40 | NMP | 98.6 | 0.17 | 0.04 | 4.3 | 35 | A |
| Example 8 | CNT dispersion liquid 8 | BT1003M | 1 | PVA 6 | 40 | NMP | 98.6 | 0.25 | 0.05 | 5.0 | 42 | A |
| Example 9 | CNT dispersion liquid 9 | BT1003M | 1 | PVA 7 | 40 | NMP | 98.6 | 0.04 | 0.03 | 1.3 | 36 | A⁺ |
| Example 10 | CNT dispersion liquid 10 | BT1003M | 1 | PVA 8 | 40 | NMP | 98.6 | 0.17 | 0.04 | 4.3 | 35 | A |
| Example 11 | CNT dispersion liquid 11 | BT1003M | 1 | PVA 9 | 40 | NMP | 98.6 | 0.13 | 0.03 | 4.3 | 30 | A |
| Comparative Example 1 | CNT dispersion liquid 12 | BT1003M | 1 | PVA 10 | 40 | NMP | 98.6 | 0.17 | 0.03 | 5.7 | 33 | C |
| Comparative Example 2 | CNT dispersion liquid 13 | BT1003M | 1 | PVA 11 | 40 | NMP | 98.6 | 1.05 | 0.15 | 7.0 | 50 | C |
| Comparative Example 3 | CNT dispersion liquid 14 | BT1003M | 1 | PVA 12 | 40 | NMP | 98.6 | 0.56 | 0.07 | 8.0 | 43 | C |
| Comparative Example 4 | CNT dispersion liquid 15 | BT1003M | 1 | PVA 13 | 40 | NMP | 98.6 | 0.53 | 0.07 | 7.6 | 36 | C |
| Comparative Example 5 | CNT dispersion liquid 16 | BT1003M | 1 | PVA 14 | 40 | NMP | 98.6 | 1.11 | 0.18 | 6.2 | 50 | C |

| | | | | | | | | | | | | |
|---|---|---|---|---|---|---|---|---|---|---|---|---|
| 1) The amount (part by mass) of a dispersant with respect to 100 parts by mass of CNTs, 2) N-methyl-2-pyrrolidone | | | | | | | | | | | | |

**[Table 3]**

| | Resin Composition | | Mixture slurry | |
|---|---|---|---|---|
| | CNT dispersion liquid | Binder resin (D) | Active material (E) | Alternating-current resistance (Ω) |
| Example 12 | CNT dispersion liquid 1 | PVDF | Lithium cobaltate | 8.8 |
| Example 13 | CNT dispersion liquid 2 | PVDF | Lithium cobaltate | 8.9 |
| Example 14 | CNT dispersion liquid 3 | PVDF | Lithium cobaltate | 7.7 |
| Example 15 | CNT dispersion liquid 4 | PVDF | Lithium cobaltate | 8.8 |
| Example 16 | CNT dispersion liquid 5 | PVDF | Lithium cobaltate | 7.2 |
| Example 17 | CNT dispersion liquid 6 | PVDF | Lithium cobaltate | 9.0 |
| Example 18 | CNT dispersion liquid 7 | PVDF | Lithium cobaltate | 8.5 |
| Example 19 | CNT dispersion liquid 8 | PVDF | Lithium cobaltate | 8.8 |
| Example 20 | CNT dispersion liquid 9 | PVDF | Lithium cobaltate | 7.3 |
| Example 21 | CNT dispersion liquid 10 | PVDF | Lithium cobaltate | 8.6 |
| Example 22 | CNT dispersion liquid 11 | PVDF | Lithium cobaltate | 8.9 |
| Comparative Example 6 | CNT dispersion liquid 12 | PVDF | Lithium cobaltate | 10.8 |
| Comparative Example 7 | CNT dispersion liquid 13 | PVDF | Lithium cobaltate | 10.5 |
| Comparative Example 8 | CNT dispersion liquid 14 | PVDF | Lithium cobaltate | 13.2 |
| Comparative Example 9 | CNT dispersion liquid 15 | PVDF | Lithium cobaltate | 9.7 |
| Comparative Example 10 | CNT dispersion liquid 16 | PVDF | Lithium cobaltate | 11.2 |

## Claims

1. A carbon nanotube dispersion liquid comprising carbon nanotubes (A), a polyvinyl alcohol (B), and a solvent (C),
wherein X/Y satisfies 0.8≤X/Y≤5.5, wherein X represents a storage elastic modulus at a strain of 0.1% of the carbon nanotube dispersion liquid and Y represents a storage elastic modulus at a strain of 1% of the carbon nanotube dispersion liquid.

2. The carbon nanotube dispersion liquid according to claim 1, wherein the polyvinyl alcohol (B) has at least one anionic group selected from the group consisting of a carboxy group and a sulfonic acid group, and an amount of modification with the anionic group is 0.5 mol% or more and 10 mol% or less.

3. The carbon nanotube dispersion liquid according to claim 1, wherein the polyvinyl alcohol (B) has a quaternary ammonium salt group, and the amount of modification is 0.1 mol% or more and 10 mol% or less.

4. The carbon nanotube dispersion liquid according to claim 1, wherein the polyvinyl alcohol (B) has a degree of saponification of 82 mol% or more and 95 mol% or less.

5. The carbon nanotube dispersion liquid according to claim 1, wherein the polyvinyl alcohol (B) has a viscosity-average degree of polymerization of 250 or more and less than 450.

6. The carbon nanotube dispersion liquid according to claim 1, wherein the solvent (C) is a water-soluble organic solvent.

7. The carbon nanotube dispersion liquid according to claim 1, wherein the solvent (C) is N-methyl-2-pyrrolidone.

8. The carbon nanotube dispersion liquid according to claim 1, wherein a content of water is 50 parts by mass or less with respect to 100 parts by mass of the carbon nanotube dispersion liquid.

9. A resin composition comprising the carbon nanotube dispersion liquid according to any one of claims 1 to 8, and a binder resin (D).

10. A mixture slurry comprising the resin composition according to claim 9, and an active material (E).

11. An electrode film that is a film formed from the mixture slurry according to claim 10.

12. A lithium-ion secondary battery comprising a positive electrode, a negative electrode, and an electrolyte, wherein at least one of the positive electrode and the negative electrode includes the electrode film according to claim 11.
